# EUROPEAN PATENT SPECIFICATION

(11) **EP 2 395 272 B1**
(45) Date of publication and mention of the grant of the patent: **30.04.2014**
(21) Application number: 11004112.6
(22) Date of filing: 18.05.2011
(51) Int. Cl.: F16L 25/01, F16L 39/00, H01R 13/00

(54) **Connector for fluid piping, connector assembly and method of connecting fluid piping**
Steckverbinder für Flüssigkeitsleitungen, Steckverbinderanordnung und Verfahren zum Verbinden von Flüssigkeitsleitungen
Connecteur pour canalisation de fluides, ensemble de connecteur et procédé de connexion de canalisation de fluides

(30) Priority: 11.06.2010 JP 2010133976
(43) Date of publication of application: 14.12.2011
(73) Proprietor: Sumitomo Wiring Systems, Ltd., Yokkaichi-city, Mie 510-8503 (JP)
(72) Inventor: Shinoda, Koji, Yokkaichi-city Mie 510-8503 (JP)
(74) Representative: Müller-Boré & Partner Patentanwälte PartG mbB

(56) References cited:
- EP-A1- 1 560 298
- WO-A1-2010/027009
- DD-A- 61 399
- FR-A- 1 432 838
- FR-A1- 2 769 136
- US-A- 5 775 953
- US-A1- 2005 046 184

## Description

The present invention relates to a connector for fluid piping, particularly gas piping, to a corresponding connector assembly and to a method of connecting fluid piping, particularly gas piping.

For example, to measure components of exhaust gas of an automotive vehicle, a connector for gas piping is used to introduce the exhaust gas from an exhaust pipe to a gas measuring device. A connector disclosed in Japanese Unexamined Patent Publication No. 2010-62035 is known as one example. A gas tube extending from the exhaust pipe is connected to this connector, and the gas tube and a mating pipe in a measuring device can be connected by connecting this connector to a mating connector provided in the gas measuring device.

The above connector for gas piping includes a metallic joint pipe formed in a connector housing main body by insert molding, and the gas tube is connected to an end portion of this joint pipe. An internally threaded portion is formed at the end portion of the joint pipe, a metallic joint member to be threadably engaged with the internally threaded portion is connected to an end portion of the gas tube, and the gas tube can be connected to the joint pipe by threadably engaging this joint member with the internally threaded portion.

If there are a plurality of gas tubes and a plurality of joint pipes, the joint pipes and the joint members need to be threadably coupled at a plurality of positions and, hence, there is a problem of poor operability. Further, if a plurality of joint pipes are arranged side by side or in a plurality of levels, an operation of mounting the joint member to the joint pipe located in a central part is performed in a narrow space due to wires of an electric connector and other influences. This further deteriorates assembling operability of the gas tubes.

FR 2 769 136 A1 discloses a connector having tubular element with end tips for connection to fluid circulation pipes. The casing is fixed on to a shutter, and it is linked to a complementary case. Tubular element is fitted into the casing and has splayed ends.

WO 2010/027009 A1 discloses a connector formed by integrally combining a connector connecting section and a pipe connecting section, which is configured compact and facilitates fitting operation. The connector is provided with a pair of pipe connecting sections and a pair of connector connecting sections, the pairs being provided in a first connector housing and a second connector housing and being connected to each other in a main hood; a pipe seal member for sealing between the pair of the pipe connecting sections; a connector seal member for sealing between the pair of connector connecting sections; and a lever for drawing and fitting to each other the first connector housing and the second connector housing by means of a cam action occurring between a cam pin provided to either the first connector housing or the second connector housing and a cam groove provided in the other.

US 2005/046184 A1 discloses a quick connector for connecting a pump and a fluid container including an upper component, a lower component, at least a telescopic tube, a connector body, and a soft cover. The upper component includes a first groove and a first buckle on one side thereof. The lower component has a second grove and a second buckle at locations corresponding to the first buckle and the first groove of the upper component, so that the upper component can be fitted to the lower component with the buckles and grooves. The telescopic tube is fitted between the upper component and the lower component to fasten the two components, and is connected to the fluid container at one end. The connector body includes an inner tube corresponding to the telescopic tube, and at least a movable board. The inner tube is partially overlaid inside telescopic tube, and is connected to the pump at one end. The movable board is fitted to the connector body with a turning shaft, and is rotary. The movable board has a buckle for connecting either the upper component or the lower component. The soft cover covers the connector body, while exposing the buckle of the movable board.

DD 61 399 A discloses a connector for connecting pneumatic or hydraulic tubes, wherein each tube of a plurality of tubes is connected to one end of corresponding plug-elements mounted in a male housing, and when the male housing is connected to the female housing, the other ends of the plug-elements are inserted into corresponding receiving portions in the female housing connected to corresponding tubes.

FR 1 432 838 A discloses a connector for connecting flexible pipes, wherein both connector elements each comprise a circular plate with bores into which pipe sleeves are inserted. The ends of the flexible pipes are each connected to the sleeves, and when both connector elements are connected to each other, a rubber gasket is sandwiched between the two circular plates, wherein the rubber gasket comprises tubular projections at locations corresponding to the bores in the circular plate, such that each corresponding tubes are connected to each other via the pipe sleeves and the tubular projections inserted into the bores in the circular plate.

The present invention was developed in view of the above situation and an object thereof is to provide a connector for fluid piping which enables a fluid tube to be mounted to a connector housing main body by an easy and simple operation.

This object is solved according to the invention by the features of the independent claims. Preferred embodiments of the invention are subject of the dependent claims.

According to one aspect of the invention, there is provided a connector for fluid piping (particularly gas piping) for detachably connecting at least one fluid tube (particularly gas tube) corresponding to at least one mating pipe provided in a mating connector, comprising:
a connector housing main body connectable to the mating connector;
at least one sub-connector to be detachably provided in the connector housing main body;
at least one joint pipe provided in the sub-connector and having one end side to be connected to the mating pipe when the connector housing main body is connected to the mating connector and the other end side being connectable to the fluid tube; and
an engaging mechanism for holding the sub-connector engaged with the connector housing main body.

According to a particular embodiment, there is provided a connector for gas piping for detachably connecting a gas tube corresponding to a mating pipe provided in a mating connector, comprising a connector housing main body connectable to the mating connector; a sub-connector detachably provided in the connector housing main body; a joint pipe provided in the sub-connector and having one end side to be connected to the mating pipe when the connector housing main body is connected to the mating connector and the other end side having the gas tube connected thereto; and an engaging mechanism for holding the sub-connector engaged with the connector housing main body.

According to the thus constructed connector for fluid/gas piping, the connector housing main body and the joint pipe are formed as separate members. By at least partly fitting the sub-connector into the connector housing main body after the fluid/gas tube is connected to the sub-connector beforehand, the fluid/gas tube can be very easily mounted into the connector housing main body. This can eliminate an assembling operation in a narrow space such as when a fluid/gas tube is assembled with a joint pipe integrally formed to a connector housing main body as with a conventional connector.

The joint pipe may be at least partly inserted into the interior of the mating pipe to be connected.

At least one O-ring to be held in contact with the inner peripheral surface of the mating pipe may be fitted on an outer peripheral part of the one end side of the joint pipe.

The joint pipe may be inserted into the interior of the mating pipe to be connected; and an O-ring to be held in contact with the inner peripheral surface of the mating pipe may be fitted on an outer peripheral part of the one end side of the joint pipe. According to this construction, a clearance between the joint pipe and the mating pipe can be sealed in an fluid- or airtight manner.

The joint pipe and the sub-connector is made of synthetic resin and unitarily formed. According to this construction, the number of parts can be reduced by integrally forming the joint pipe and the sub-connector using a molding die or the like, which is preferable in terms of management and cost.

The mating connector may include a mating electrical connector housing; and the connector housing main body may include an electrical connector housing connectable to the mating electrical connector housing. According to this construction, a hybrid connector for gas piping including a joint pipe for gas and an electrical connector housing can be formed.

A plurality of mating pipes is provided in the mating connector; and a plurality of joint pipes each having the fluid or gas tube connected thereto is provided in the sub-connector. According to this construction, the plurality of joint pipes having the fluid or gas tubes connected thereto can be collectively mounted into the connector housing main body, whereby operation efficiency can be drastically improved. Further, even if the joint pipes are arranged side by side or in a plurality of levels, it is not necessary to perform a fluid or gas tube assembling operation in a narrow space such as an operation of mounting fluid or gas tubes to joint pipes integrally formed to the connector housing main body as with a conventional connector, and the fluid or gas tubes can be simply and easily connected.

The connector housing main body includes at least one sub-connector accommodating portion capable of at least partly accommodating the at least one sub-connector.

The sub-connector includes a coupling plate which holds portions of a plurality of joint pipes and fixes the plurality of joint pipes in an arrangement and one or more flexible engaging pieces provided on the coupling plate and engageable with one or more engaging projections provided on the connector housing main body, preferably on inner surfaces of the sub-connector accommodating portion.

The one or more flexible engaging pieces are resiliently deformed toward the center of the coupling plate by moving onto the one or more respective engaging projections in a connecting process of inserting the sub-connector into the sub-connector accommodating portion and are resiliently at least partly restored to be engaged with the respective engaging projections at a connection ending position.

The connector housing main body includes a sub-connector accommodating portion capable of accommodating the sub-connector; the sub-connector includes a coupling plate which holds the centers of a plurality of joint pipes and fixes the plurality of joint pipes in an arrangement and a pair of flexible engaging pieces provided on end surfaces of the coupling plate opposite to each other and engageable with a pair of engaging projections provided on inner surfaces of the sub-connector accommodating portion; and the flexible engaging pieces are resiliently deformed toward the center of the coupling plate by moving onto the engaging projections in a connecting process of inserting the sub-connector into the sub-connector accommodating portion and are resiliently restored to be engaged with the engaging projections at a connection ending position.

According to this construction, the sub-connector can be mounted into the sub-connector accommodating portion through a one-touch operation only by inserting the sub-connector into the sub-connector accommodating portion of the connector housing main body.

The flexible engaging pieces include a pair of inclined pieces extending from front end portions of the end surfaces of the coupling plate at the one end sides of the joint pipes in backward and outward directions in a cantilever manner and a pair of engaging pieces extending further backward from the rear ends of the both inclined pieces; the both inclined pieces are formed at positions which come into contact with the engaging projections when the sub-connector is inserted into the sub-connector accommodating portion; and the engaging pieces particularly are formed with engaging holes and parts thereof before or adjacent to the engaging holes may serve as pressing/disengaging portions.

According to this construction, the inclined pieces come into contact with the engaging projections when the sub-connector is inserted into the sub-connector accommodating portion, whereby the flexible engaging pieces can be reliably resiliently deformed toward the center of the coupling plate. Further, in the case of separating the sub-connector from the connector housing main body for maintenance or another reason, the sub-connector can be easily separated by pressing the pressing/disengaging portions from the opposite sides of the coupling plate toward the center of the coupling plate to resiliently deform the flexible engaging pieces.

According to another aspect of the invention, there is provided a connector assembly for fluid piping comprising a connector according to the above aspect and a mating connector connectable with a connector housing main body of the connector.

Particularly, the mating connector includes a mating electrical connector housing; and the connector housing main body includes an electrical connector housing connectable to the mating electrical connector housing.

According to still another aspect of the invention, there is provided a method of detachably connecting at least one fluid tube to at least one mating pipe, in particular using a connector assembly according to the above aspect, comprising the following steps:
providing a connector housing main body and a mating connector connectable with each other;
providing at least one sub-connector having at least one joint pipe,
connecting one end side of the joint pipe to the fluid tube;
detachably providing the sub-connector in the connector housing main body and holding the sub-connector engaged with the connector housing main body, and
connecting the connector housing main body to the mating connector whereby the other end side of the joint pipe is connected to the mating pipe.

Particulalry, the joint pipe is at least partly inserted into the interior of the mating pipe to be connected.

Further particularly, at least one O-ring to be held in contact with the inner peripheral surface of the mating pipe is fitted on an outer peripheral part of the one end side of the joint pipe and/or the joint pipe and the sub-connector are made of synthetic resin and integrally or unitarily formed.

According to the above, the fluid or gas tube can be mounted to the connector housing main body by an easy and simple operation.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a connector housing main body according to one embodiment when viewed from front,
FIG. 2 is a perspective view of the connector housing main body when viewed from behind,
FIG. 3 is a front view of the connector housing main body,
FIG. 4 is a rear view of the connector housing main body,
FIG. 5 is a front view of a sub-connector according to the embodiment,
FIG. 6 is a bottom view showing a state where gas tubes are connected to the sub-connector according to the embodiment,
FIG. 7 is a side view showing the state of FIG. 6,
FIG. 8 is a bottom view partly in section showing a state where the gas tubes are connected to the sub-connector,
FIG. 9 is a bottom view partly in section showing a state where the sub-connector is mounted in the connector housing main body, and
FIG. 10 is a section showing a state after connection of a connector for gas piping according to the embodiment and a mating connector.

### <Embodiment>

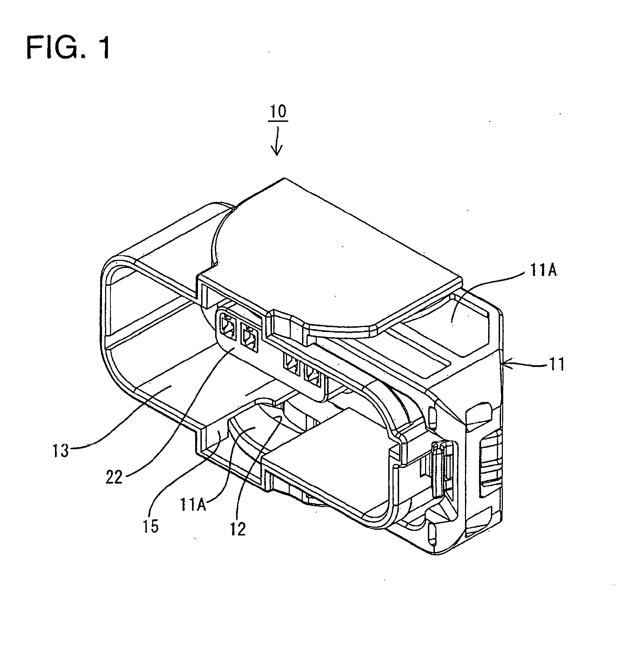

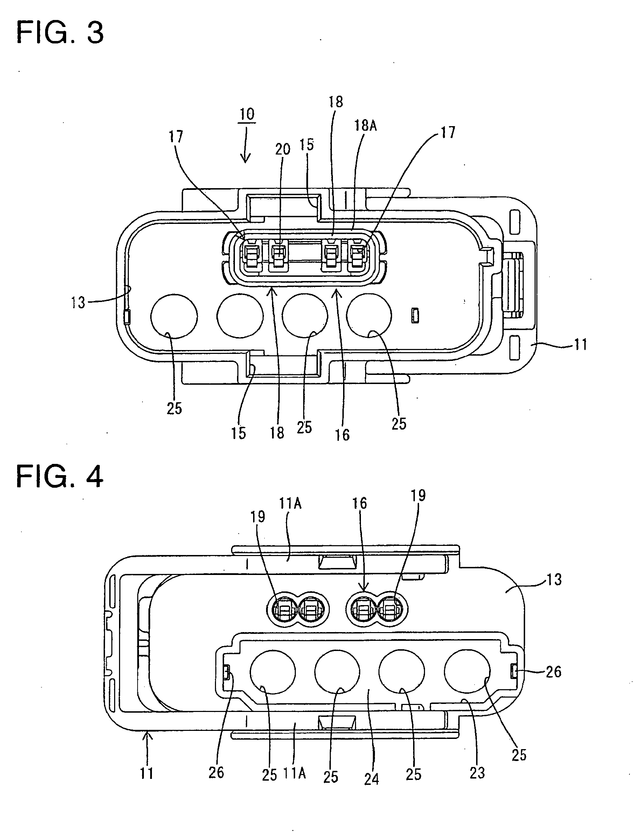

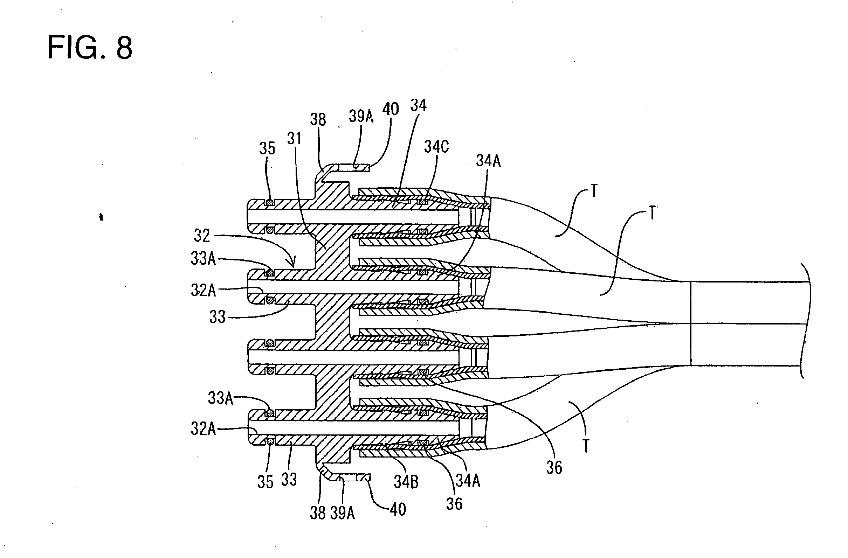

One particular embodiment of the present invention is described with reference to FIGS. 1 to 10.

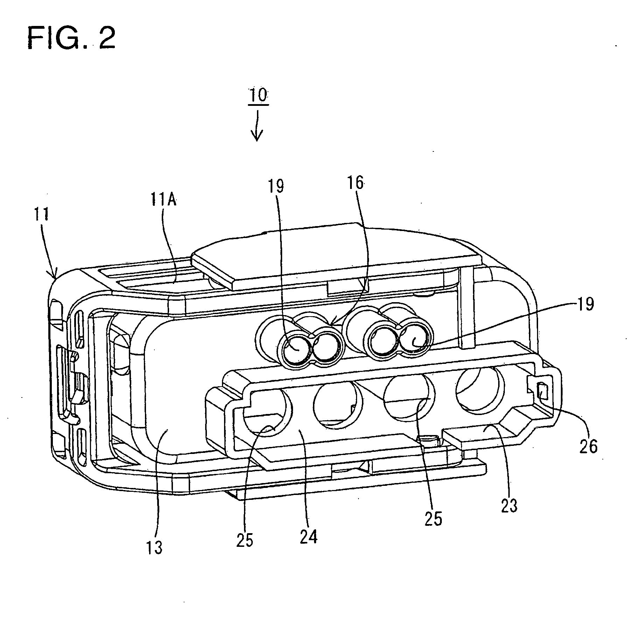

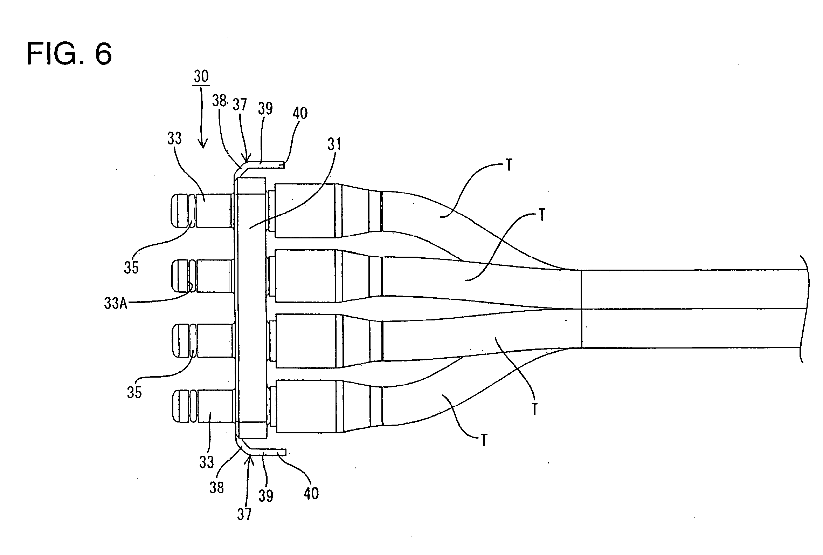

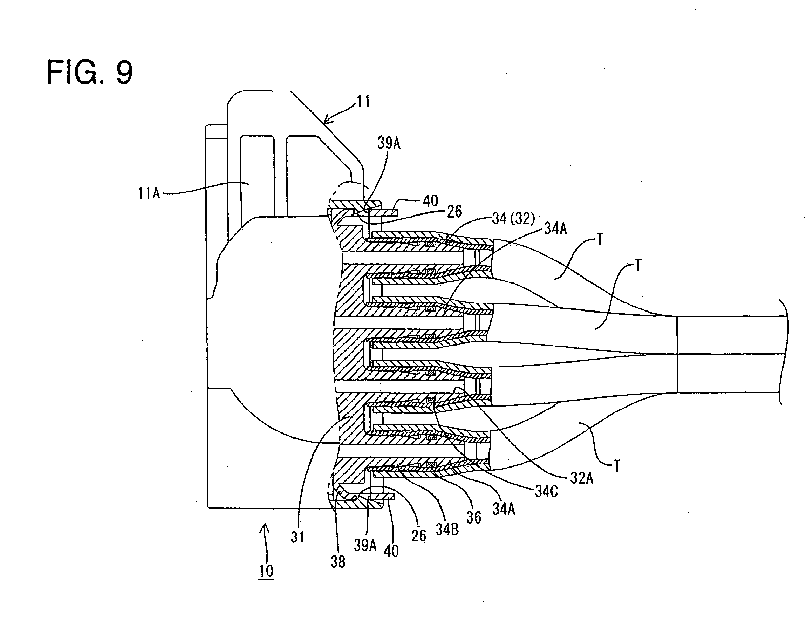

A connector for gas piping according to this embodiment includes a connector housing main body 10, particularly substantially in the form of a receptacle with four rounded corners as shown in FIGS. 1 and 2, and a sub-connector 30 having one or more gas or fluid tubes connected thereto as shown in FIG. 6 and is formed by at least partly fitting the sub-connector 30 into the connector housing main body 10 as shown in FIG. 9. In the following description, forward and backward directions are based on a lateral direction in FIG. 9 and a side of a connection surface (left side in FIG. 9) of the connector for gas piping is referred to as a front side.

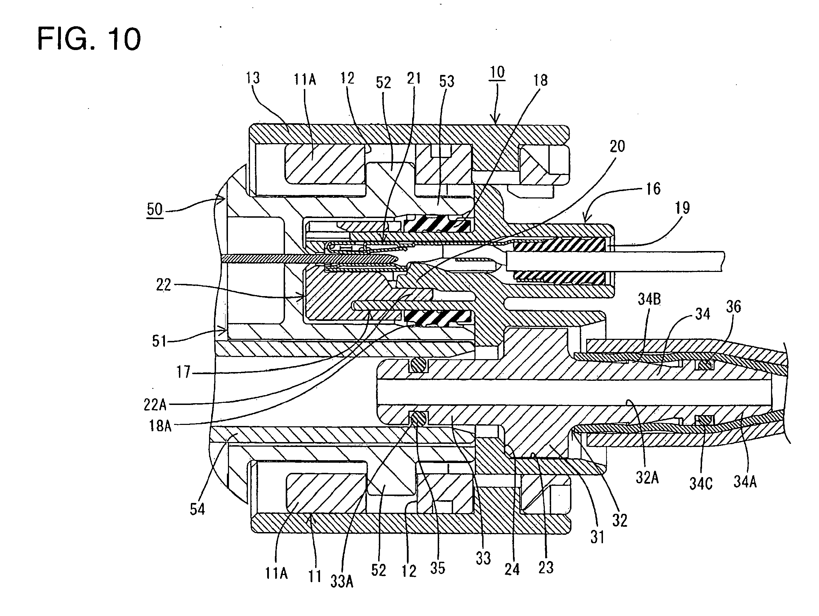

The connector housing main body 10 is made e.g. of synthetic resin, and a connecting lever 11 (as a particular movable member) which particularly substantially is U-shaped in front view and/or formed to substantially extend along the outer peripheral surface of the connector housing main body 10 is movably or displaceable (particularly rotatably or pivotably) supported on outer surfaces of the connector housing main body 10 as shown in FIGS. 1 to 4. As shown in FIG. 1, at least one cam groove 12 is formed in (particularly each of) a pair of arm portions 11 A particularly substantially facing each other in this connecting lever 11. The (particularly both) cam groove(s) 12 is/are engageable with one or more, particularly a pair of cam pins 52 provided on a mating connector housing 51 of a mating connector 50. Upon connecting the mating connector 50 and the connector housing main body 10, the one or more cam pins 52 are pulled toward back sides of the cam grooves 12 by a cam action generated by operating or displaying the connecting lever 11 (see FIG. 10). In this way, the respective connector housings 10, 51 are pulled toward each other to be connected or their connection is assisted.

The connector housing main body 10 is formed with a receptacle 13 which substantially is open forward. One or more, particularly a pair of escaping grooves 15 extending from the opening of the receptacle 13 to the back wall of the receptacle 13 are formed at widthwise intermediate parts (particularly substantially central parts) of inner surfaces of the receptacle 13. Note that the both escaping grooves 15 are formed substantially along entrance paths for the respective cam pins 52 of the mating connector housing 51 and/or guide the corresponding cam pins 52 to the cam grooves 12 of the connecting lever 11 when the mating connector housing 51 is at least partly inserted into the receptacle 13 to be connected.

An electrical connector housing 16 is formed to substantially extend in forward and backward directions through the back wall of the receptacle 13 as shown in FIG. 10.

This electrical connector housing 16 includes a fitting tube portion 17 substantially extending forward from the back wall of the receptacle 13. A looped or rings-shaped seal member 18 including one or more lip portions 18A is to be mounted on or in the outer peripheral surface of (particularly a base end side of) this fitting tube portion 17. This seal member 18 seals between the electrical connector housings 16, 53 in a fluid- or liquid-tight manner when the fitting tube portion 17 is at least partly fitted into the mating electrical connector housing 53 in the form of a receptacle provided in the mating connector 50.

One or more, particularly two pairs of cavities 19 are provided particularly adjacent to each other, each pair being spaced apart from the other, and particularly are arranged substantially side by side in the electrical connector housing 16. A flexible locking lance 20 (particularly substantially extending in a forward and inward direction in a cantilever manner) is provided at an inner surface of the (particularly each) cavity 19 as shown in FIG. 10. This flexible locking lance 20 locks a female terminal fitting 21 at least partly inserted into the cavity 19 from an insertion side, particularly substantially from behind, to retain the female terminal fitting 21 in the cavity 19.

After the female terminal fittings 21 are locked by the flexible locking lances 20, a restricting tube portion 22 (particularly substantially in the form of a rectangular or polygonal tube) is mounted on or to (particularly a leading end portion of) the fitting tube portion 17. This restricting tube portion 22 includes one or more deformation restricting portions 22A (particularly substantially in the form of tongues), which can come into close contact with outer surfaces of the flexible locking lances 20 to prevent resilient deformation of the flexible locking lances 20 when the restricting tube portion 22 is mounted on the fitting tube portion 17.

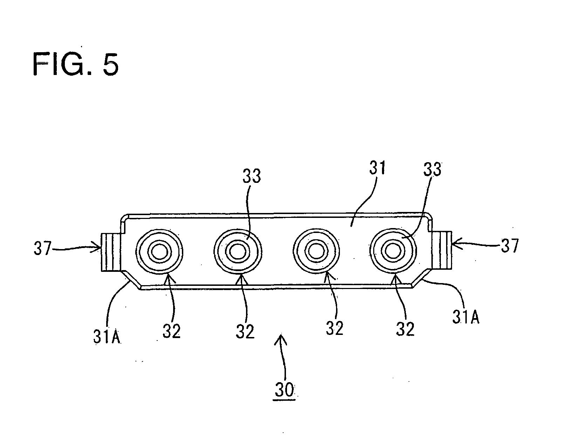

On the other hand, as shown in FIGS. 5 to 8, the sub-connector 30 includes a coupling plate 31 (particularly substantially in the form of a long and narrow plate) and one or more joint pipes 32 provided to penetrate through the coupling plate 31.

As shown in FIG. 5, the coupling plate 31 includes one or more inclined portions 31A formed by lower or outer parts of the opposite lateral (left and right) sides inclined inwardly, so that the width of the upper end surface is somewhat longer than that of the lower end surface.

Each joint pipe 32 particularly has a tubular or substantially cylindrical shape and, as shown in FIGS. 6 to 8, a plurality of (e.g. four) joint pipes 32 are so integrally or unitarily formed to the coupling plate 31 as to penetrate through plate surfaces of the coupling plate 31. One end of each joint pipe 32 before the coupling plate 31 serves as a pipe connecting portion 33 to be connected to a mating pipe 54 provided in the mating connector 50, and the other end at the rear side serves as a tube connecting portion 34 to be connected to a fluid or gas tube T. Note that a continuous fluid or gas flow path 32A extending from the opening of the pipe connecting portion 33 to that of the tube connecting portion 34 is provided in each joint pipe 32.

As shown in FIG. 10, the pipe connecting portions 33 are so mounted as to substantially project forward from the back wall of the receptacle 13 when the sub-connector 30 is mounted into the connector housing main body 10. When the connector housing main body 10 is connected to the mating connector housing 51, the one or more pipe connecting portions 33 are at least partly inserted and/or fitted into the mating pipes 54 provided in the mating connector housing 51.

At least one first annular groove 33A having (or for at least partly accommodating) a first O-ring 35 mounted therein is formed in the outer peripheral surface of a leading end side of the pipe connecting portion 33. The first O-ring 35 particularly seals a clearance between the inner peripheral surface of the mating pipe 54 and the outer peripheral surface of the pipe connecting portion 33 in a fluid- or liquid-tight manner to prevent entrance of water and the like into the interiors of the pipes when the pipe connecting portion 33 is connected to the mating pipe 54.

On the other hand, a leading end side of each tube connecting portion 34 is formed into at least one tapered portion 34A so that the tube connecting portion 34 can be easily at least partly inserted into the fluid or gas tube T.

At least one annular engaging projection 34B outwardly widened from the rear side toward the front side (particularly substantially over the entire circumference) is formed on the outer peripheral surface of the tube connecting portion 34. This annular engaging projection 34B is to be engaged with the inner surface of the fluid or gas tube T to retain the tube connecting portion 34 in the gas tube T when the tube connecting portion 34 is at least partly inserted into the interior of the gas tube T.

Further, at least one second annular groove 33C having (or for at least partly accommodating) a second O-ring 36 mounted therein is formed in the outer peripheral surface of the tube connecting portion 34 behind or adjacent to the tapered portion 34A. The second O-ring 36 particularly seals a clearance between the inner peripheral surface of the fluid or gas tube T and the outer peripheral surface of the tube connecting portion 34 in a fluid- or liquid-tight manner to prevent entrance of water and the like into the interiors of the pipes when the tube connecting portion 34 is inserted into the gas tube T.

As shown in FIGS. 2, 4 and 10, a sub-connector accommodating portion 23 for at least partly accommodating the sub-connector 30 therein is provided ib or on (particularly the rear end surface of) the connector housing main body 10. The inner peripheral shape of the sub-connector 23 particularly is substantially the same as the outer peripheral shape of the sub-connector 30 when viewed from front as shown in FIG. 2. Thus, when the sub-connector 30 at least partly is inserted into the sub-connector accommodating portion 23, the outer peripheral surface of the sub-connector 30 particularly is held in substantially close contact with the inner peripheral surface of the sub-connector accommodating portion 23. Note that the one or more inclined portions 31 A provided at the outer or lower parts of the lateral (left and right) sides of the sub-connector 30 particularly function to position the sub-connector 30 when the sub-connector 30 is inserted into the sub-connector accommodating portion 23.

As shown in FIG. 2, one or more (e.g. four) pipe insertion holes 25 communicating with the receptacle 13 are formed in (particularly a back wall 24 of) the sub-connector accommodating portion 23. These pipe insertion holes 25 particularly are formed to be one size larger than the outer shape of the pipe connecting portions 33 of the sub-connector 30. Note that the respective pipe insertion holes 25 are so set that the pipe connecting portions 33 are or can be respectively inserted into the corresponding pipe insertion holes 25 as shown in FIG. 10 when the sub-connector 30 is mounted into the sub-connector accommodating portion 23.

On the other hand, as shown in FIGS. 6 to 9, one or more, particularly a pair of flexible engaging pieces 37 are formed on (particularly the substantially opposite side surfaces of) the coupling plate 31 of the sub-connector 30 facing in a width direction. Each of these flexible engaging pieces 37 includes an inclined piece 38 substantially extending from the front end of the side surface of the coupling plate 31 in a backward and outward direction particularly substantially in a cantilever manner and an engaging piece 39 extending further backward from the rear end surface of the inclined piece 38.

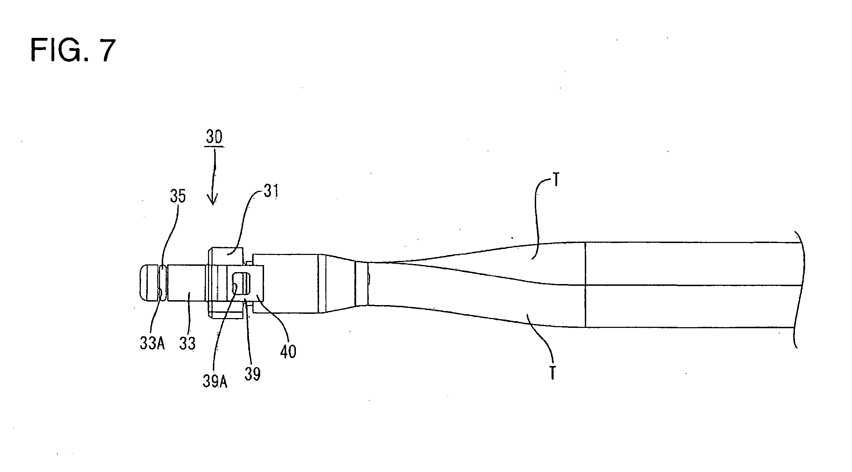

As shown in FIG. 7, a (particularly substantially rectangular or polygonal) engaging hole 39A is formed in an intermediate position (particularly in substantially the center) of the (particularly each) engaging piece 39. The one or more engaging holes 39A are engaged or engageable with one or more, particularly a pair of engaging projections 26 provided in the sub-connector accommodating portion 23 to retain the sub-connector 30 in the sub-connector accommodating portion 23 when the sub-connector 30 is at least partly inserted into the sub-connector accommodating portion 23. Note that the engaging projections 26 particularly are inclined inwardly from the rear side to the front side.

Leading end portions of the engaging pieces 39 serve as pressing/disengaging portions 40. This pair of pressing/disengaging portions 40 particularly press the sub-connector 30 from the substantially opposite widthwise sides toward the center of the coupling plate 31 at the time of separating the sub-connector 30 from the sub-connector accommodating portion 23. Then, the both flexible engaging pieces 37 are resiliently deformed to enable the sub-connector 30 to be separated from the sub-connector accommodating portion 23.

The connector for gas piping of this embodiment is structured as described above. Next, a method for mounting the sub-connector 30 into the connector housing main body 10 is briefly described, and functions and effects of the connector for gas piping are also described in conjunction with the method.

First, the respective tube connecting portions 34 of the sub-connector 30 are pressed into the gas tubes T beforehand to prepare the sub-connector 30 having a plurality of gas tubes T connected thereto (see FIGS. 6 to 8).

Subsequently, the sub-connector 30 is positioned substantially in conformity with the shape of the opening of the sub-connector accommodating portion 23 of the connector housing main body 10 and/or at least partly inserted into the sub-connector accommodating portion 23. In this connecting process, the one or more inclined pieces 38 of the one or more flexible engaging pieces 37 located at (particularly substantially the opposite widthwise sides of) the sub-connector 30 come into contact with the one or more engaging projections 26 of the sub-connector accommodating portion 23 to be pressed and the (particularly both) flexible engaging pieces 37 are resiliently deformed substantially toward the center of the coupling plate 31. The sub-connector 30 is further inserted particularly substantially until the front end surface of the coupling plate 31 comes into contact with the back wall 24 of the sub-connector accommodating portion 23. Then, the one or more engaging projections 26 are engaged with the one or more respective engaging holes 39A of the one or more flexible engaging pieces 37 and a contact state of the flexible engaging pieces 37 and the engaging projections 26 is canceled. In this way, the flexible engaging pieces 37 are resiliently at least partly restored to retain the sub-connector 30 in the sub-connector accommodating portion 23.

As described above, according to the connector for gas piping of this embodiment, the gas tubes T can be mounted to the connector housing main body 10 by a very easy and simple operation only by inserting the sub-connector 30 into the sub-connector accommodating portion 23 of the connector housing main body 10. Further, in the case of detaching the sub-connector 30 from the connector housing main body 10 for maintenance or other reason, the sub-connector 30 can be very easily detached from the connector housing main body 10 particularly by pressing the one or more (particularly both) pressing/disengaging portions 40 laterally, particularly from the opposite widthwise sides toward the center of the coupling plate 31 to resiliently deform the flexible engaging pieces 37.

Accordingly, to provide a connector for fluid or gas piping which enables a gas tube to be mounted to a connector housing main body by an easy and simple operation, a connector for fluid or gas piping for detachably connecting fluid or gas tubes T corresponding to mating pipes 54 provided in a mating connector 50 is provided with a connector housing main body 10 connectable to the mating connector 50, at least one sub-connector 30 provided in or on or at the connector housing main body 10, joint pipes 32 connectable to the mating pipes 54 and having the fluid or gas tubes T connected thereto, and an engaging mechanism for holding or engaging or locking the sub-connector 30 and the connector housing main body 10 in an engaged state.

### <Other Embodiments>

The present invention is not limited to the above described and illustrated embodiment. For example, the following embodiments are also included in the technical scope of the present invention.
(1) Although a total of four pairs of the joint pipes 32 of the sub-connector 30 and the pipe insertion holes 25 of the connector housing main body 10 are formed in the above embodiment, the present invention is not limited to such a mode. For example, there may be a pair of or three, five or more pairs of the joint pipe(s) 32 formed in the sub-connector 30 and the pipe insertion hole(s) 25 formed in the connector housing 10. In other words, according to the invention there my be one or more joint pipe(s) 32 formed in the sub-connector 30 and/or one or more pipe insertion hole(s) 25 formed in the connector housing 10.
(2) Although the flexible engaging pieces 37 are formed at the opposite widthwise sides of the sub-connector 30 in the above embodiment, the present invention is not limited to such a mode. For example, the flexible engaging pieces 37 may be provided at opposite upper and lower sides of the sub-connector 30.
(3) In the above embodiment, the sub-connector 30 is formed with the one or more flexible engaging pieces 37 including the one or more engaging holes 39A, the sub-connector accommodating portion 23 is formed with the one or more engaging projections 26 and the sub-connector 30 is retained in the sub-connector accommodating portion 23 particularly by engaging the one or more engaging projections 26 with the one or more respective engaging holes 39A. However, the present invention is not limited to such a mode. For example, one or more resilient engaging claws may be formed at or near the opening of the sub-connector accommodating portion 23, one or more engaging portions may be formed on the sub-connector 30 and the sub-connector 30 may be retained in the sub-connector accommodating portion 23 by locking the engaging portion(s) by the resilient engaging claw(s).
(4) Although the first O-ring 35 to be held in contact with the inner peripheral surface of the mating pipe 54 is fitted or mounted on or to the outer peripheral part of the pipe connecting portion 33 of each joint pipe 32 in the above embodiment, the present invention is not limited to such a mode. For example, a (particularly substantially cylindrical) seal member including one or more inner lip portions to be held in contact with the outer peripheral surface of the pipe connecting portion 33 and/or one or more outer lip portions to be held in contact with the inner peripheral surface of the mating pipe may be mounted.
(5) Although the joint pipes 32 and the coupling plate 31 of the sub-connector 30 are integrally or unitarily formed in the above embodiment, the present invention is not limited to such a mode. For example, the coupling plate 31 may be formed with one or more pipe engaging holes for holding the one or more joint pipes 32, and the sub-connector particularly made up of two members may be formed by at least partly inserting and engaging the separately formed one or more joint pipes 32 into and with the one or more pipe engaging holes.
(6) Although the one or more pressing/disengaging portions 40 are provided on the one or more flexible engaging pieces 37 and the sub-connector 30 is separated from the connector housing main body 10 by pressing the pressing/disengaging portion(s) 40 in the above embodiment, the present invention is not limited to such a mode. For example, the sub-connector 30 may be separated from the sub-connector accommodating portion 23 using a special jig. Alternatively, the sub-connector 30 may be inseparably mounted into the sub-connector accommodating portion 23.

### LIST OF REFERENCE NUMERALS

10: connector housing main body
16: electrical connector housing
23: sub-connector accommodating portion
26: engaging projection
30: sub-connector
31: coupling plate
32: joint pipe
35: first O-ring (O-ring)
37: flexible engaging piece
38: inclined piece
39: engaging piece
39A: engaging hole
40: pressing/disengaging portion
50: mating connector
53: mating electrical connector housing
54: mating pipe
T: gas tube

## Claims

1. A connector for fluid piping for detachably connecting a plurality of fluid tubes (T) corresponding to a plurality of mating pipes (54) provided in a mating connector (50), comprising:
a connector housing main body (10) connectable to the mating connector (50);
at least one sub-connector (30) to be detachably provided in the connector housing main body (10);
a plurality of joint pipes (32) provided in the sub-connector (30) and each having one end side to be connected to a corresponding mating pipe (54) when the connector housing main body (10) is connected to the mating connector (50) and the other end side being connectable to a corresponding fluid tube (T); and
an engaging mechanism (26; 37) for holding the sub-connector (30) engaged with the connector housing main body (10),
wherein the plurality of joint pipes (32) and the sub-connector (30) are made of synthetic resin and unitarily formed,
wherein the connector housing main body (10) includes at least one sub-connector accommodating portion (23) capable of at least partly accommodating the at least one sub-connector (30),
wherein the sub-connector (30) includes a coupling plate (31) which holds portions of a plurality of joint pipes (32) and fixes the plurality of joint pipes (32) in an arrangement and one or more flexible engaging pieces (37) provided on the coupling plate and engageable with one or more engaging projections (26) provided on the connector housing main body (10), on inner surfaces of the sub-connector accommodating portion (23),
wherein the one or more flexible engaging pieces (37) are resiliently deformed toward the center of the coupling plate (31) by moving onto the one or more respective engaging projections (26) in a connecting process of inserting the sub-connector (30) into the sub-connector accommodating portion (23) and are resiliently at least partly restored to be engaged with the respective engaging projections (26) at a connection ending position,
wherein the flexible engaging pieces (37) include a pair of inclined pieces (38) extending from front end portions of the end surfaces of the coupling plate (31) at the one end sides of the joint pipes (32) in backward and outward directions in a cantilever manner and a pair of engaging pieces (39) extending further backward from the rear ends of the both inclined pieces (38),
wherein the both inclined pieces (38) are formed at positions which come into contact with the engaging projections (26) when the sub-connector (30) is inserted into the sub-connector accommodating portion (23), and
wherein the engaging pieces (39) are formed with engaging holes (39A) and parts thereof before or adjacent to the engaging holes (39A) serve as pressing/disengaging portions (40).

2. A connector for fluid piping according to claim 1, wherein the joint pipe (32) is at least partly inserted into the interior of the mating pipe (54) to be connected.

3. A connector for fluid piping according to any one of the preceding claims, wherein at least one O-ring (35) to be held in contact with the inner peripheral surface of the mating pipe (54) is fitted on an outer peripheral part of the one end side of the joint pipe (32).

4. A connector assembly for fluid piping comprising a connector according to any one of the preceding claims and a mating connector (50) connectable with a connector housing main body (10) of the connector.

5. A connector assembly for fluid piping according to claim 4, wherein:
the mating connector (50) includes a mating electrical connector housing (53); and
the connector housing main body (10) includes an electrical connector housing (16) connectable to the mating electrical connector housing (53).

6. A method of detachably connecting a plurality of fluid tubes (T) to a plurality of mating pipes (54), comprising the following steps:
providing a connector housing main body (10) and a mating connector (50) connectable with each other;
providing at least one sub-connector (30) having a plurality of joint pipes (32),
connecting one end side of each of the joint pipes (32) to a corresponding fluid tube (T);
detachably providing the sub-connector (30) in the connector housing main body (10) and holding the sub-connector (30) engaged with the connector housing main body (10), and
connecting the connector housing main body (10) to the mating connector (50) whereby the other end side of each of the joint pipes (32) is connected to a corresponding mating pipe (54),
wherein the plurality of joint pipes (32) and the sub-connector (30) are made of synthetic resin and unitarily formed,
wherein the connector housing main body (10) includes at least one sub-connector accommodating portion (23) capable of at least partly accommodating the at least one sub-connector (30),
wherein the sub-connector (30) includes a coupling plate (31) which holds portions of a plurality of joint pipes (32) and fixes the plurality of joint pipes (32) in an arrangement and one or more flexible engaging pieces (37) provided on the coupling plate and engageable with one or more engaging projections (26) provided on the connector housing main body (10), on inner surfaces of the sub-connector accommodating portion (23),
wherein the one or more flexible engaging pieces (37) are resiliently deformed toward the center of the coupling plate (31) by moving onto the one or more respective engaging projections (26) in a connecting process of inserting the sub-connector (30) into the sub-connector accommodating portion (23) and are resiliently at least partly restored to be engaged with the respective engaging projections (26) at a connection ending position,
wherein the flexible engaging pieces (37) include a pair of inclined pieces (38) extending from front end portions of the end surfaces of the coupling plate (31) at the one end sides of the joint pipes (32) in backward and outward directions in a cantilever manner and a pair of engaging pieces (39) extending further backward from the rear ends of the both inclined pieces (38),
wherein the both inclined pieces (38) are formed at positions which come into contact with the engaging projections (26) when the sub-connector (30) is inserted into the sub-connector accommodating portion (23), and
wherein the engaging pieces (39) are formed with engaging holes (39A) and parts thereof before or adjacent to the engaging holes (39A) serve as pressing/disengaging portions (40).

7. A method according to claim 6, wherein the joint pipe (32) is at least partly inserted into the interior of the mating pipe (54) to be connected.

8. A method according to claim 6 or 7, wherein at least one O-ring (35) to be held in contact with the inner peripheral surface of the mating pipe (54) is fitted on an outer peripheral part of the one end side of the joint pipe (32) and/or the joint pipe (32) and the sub-connector (30) are made of synthetic resin and integrally or unitarily formed.

## Patentansprüche

1. Ein Steckverbinder für Flüssigkeitsleitungen, zur lösbaren Verbindung einer Vielzahl an Flüssigkeitsrohren (T), die einer Vielzahl an Rohranschlüssen (54) entsprechen, die in einem Gegenstecker (50) bereitgestellt werden, wobei der Steckverbinder Folgendes umfasst:
ein Steckergehäuse-Hauptkörper (10) der mit dem Gegenstecker (50) verbindbar ist;
mindestens einen Unter-Steckverbinder (30), der im Steckergehäuse-Hauptkörper (10) lösbar bereitzustellen ist;
eine Vielzahl an Verbindungsrohren (32), die im Unter-Steckverbinder (30) bereitgestellt wird, wobei jedes eine Stirnseite aufweist, die mit einem entsprechenden Rohranschluss (54) zu verbinden ist, wenn der Steckergehäuse-Hauptkörper (10) mit dem Gegenstecker (50) verbunden ist, und wobei die andere Stirnseite mit einem entsprechenden Flüssigkeitsrohr (T) verbindbar ist; und
einen Einrastmechanismus (26; 37), um den Unter-Steckverbinder (30) mit dem Steckergehäuse-Hauptkörper (10) im Eingriff zu halten,
wobei die Vielzahl an Verbindungsrohren (32) und der Unter-Steckverbinder (30) aus Kunstharz bestehen und einheitlich hergestellt werden,
wobei der Steckergehäuse-Hauptkörper (10) mindestens einen Unter-Steckverbinder-Aufnahmeabschnitt (23) beinhaltet, die in der Lage ist den mindestens einen Unter-Steckverbinder (30) zumindest teilweise aufzunehmen,
wobei der Unter-Steckverbinder (30) eine Kupplungsplatte (31) beinhaltet, die Abschnitte einer Vielzahl an Verbindungsrohren (32) hält und die Vielzahl an Verbindungsrohren (32) in einer Anordnung fixiert, und weiterhin ein oder mehrere flexible Eingriffsteile (37) beinhaltet, die auf der Kupplungsplatte bereitgestellt werden und mit einem oder mehreren auf dem Steckergehäuse-Hauptkörper (10), an inneren Flächen des Steckverbinder-Aufnahmeabschnitts (23) bereitgestellten Eingriffs-Vorsprüngen (26) in Eingriff bringbar sind,
wobei der oder die flexiblen Eingriffsteile (37) in Richtung des Zentrums der Kupplungsplatte (31) durch eine Bewegung auf den oder die respektiven Eingriffs-Vorsprünge (26) bei einem Verbindungsprozess elastisch verformt werden, bei dem der Unter-Steckverbinder (30) in den Steckverbinder-Aufnahmeabschnitt (23) eingesetzt wird, und elastisch zumindest teilweise zurückversetzt werden, um mit den jeweiligen Eingriffs-Vorsprüngen (26), in einer Verbindungs-Endposition, im Eingriff zu stehen,
wobei die flexiblen Eingriffsteile (37) ein Paar geneigte Teile (38) beinhalten, die von vorderen Endabschnitten der Endflächen der Kupplungsplatte (31) bei den einen Stirnflächen der Verbindungsrohre (32) ausgehend, nach hinten und nach außen gerichtet, nach Art eines Kragarmes verlaufen, und ein Paar Eingriffsteile (39), die weiter nach hinten von den hinteren Enden der beiden geneigten Teile (38) verlaufen,
wobei die beiden geneigten Teile (38) an Positionen gebildet werden, die mit den Eingriffs-Vorsprüngen (26) in Kontakt kommen, wenn der Unter-Steckverbinder (30) in den Steckverbinder-Aufnahmeabschnitt (23) eingesetzt wird, und
wobei die Eingriffsteile (39) mit Eingriffslöchern (39A) gebildet werden und Teile davon vor den oder in der Nähe der Eingriffslöcher (39A) als Press-/Ausrück-Abschnitte (40) dienen.

2. Ein Steckverbinder für Flüssigkeitsleitungen nach Anspruch 1, wobei das Verbindungsrohr (32) zumindest teilweise in das Innere des Rohranschlusses (54) eingefügt wird, um verbunden zu werden.

3. Ein Steckverbinder für Flüssigkeitsleitungen nach irgendeinem der vorhergehenden Ansprüche, wobei mindestens ein O-Ring (35), der in Kontakt mit der inneren Umfangsfläche des Rohranschlusses (54) gehalten werden soll, an einen äußeren Umfangsbereich der einen Kopfseite des Verbindungsrohrs (32) angepasst wird.

4. Eine Steckverbinderbaugruppe zur Flüssigkeitsleitung, der einen Steckverbinder nach einem der vorhergehenden Ansprüche umfasst, und einen Gegenstecker (50), der mit einem Steckergehäuse-Hauptkörper (10) des Steckverbinders verbindbar ist.

5. Eine Steckverbinderbaugruppe zur Flüssigkeitsleitung nach Anspruch 4, wobei:
der Gegenstecker (50) ein elektrischen Steckverbinder-Passgehäuse (53) beinhaltet; und
der Steckergehäuse-Hauptkörper (10) ein elektrischen Steckverbinder-Gehäuse (16) beinhaltet, der mit dem elektrischen Steckverbinder-Passgehäuse (53) verbindbar ist.

6. Ein Verfahren zur lösbaren Verbindung einer Vielzahl von Flüssigkeitsleitungen (T) mit einer Vielzahl von Rohranschlüssen (54), das die folgenden Schritte umfasst:
bereitstellen eines Steckergehäuse-Hauptkörpers (10) und eines Gegensteckers (50), die miteinander verbindbar sind;
bereitstellen von mindestens einem Unter-Steckverbinder (30), der eine Vielzahl an Verbindungsrohren (32) aufweist,
verbinden einer Stirnseite jedes Verbindungsrohrs (32) mit einem entsprechenden Flüssigkeitsrohr (T);
den Unter-Steckverbinders (30) im Steckergehäuse-Hauptkörper (10) lösbar bereitstellen und den Unter-Steckverbinder (30) mit dem Steckergehäuse-Hauptkörper (10) im Eingriff halten, und
verbinden des Steckergehäuse-Hauptkörpers (10) mit dem Gegenstecker (50), wobei die andere Stirnseite jedes Verbindungsrohrs (32) mit einem entsprechenden Rohranschluss (54) verbunden wird,
wobei die Vielzahl an Verbindungsrohren (32) und der Unter-Steckverbinder (30) aus Kunstharz bestehen und einheitlich hergestellt werden,
wobei der Steckergehäuse-Hauptkörper (10) mindestens einen Unter-Steckverbinder-Aufnahmeabschnitt (23) beinhaltet, die in der Lage ist, den mindestens einen Unter-Steckverbinder (30) zumindest teilweise aufzunehmen,
wobei der Unter-Steckverbinder (30) eine Kupplungsplatte (31) beinhaltet, die Abschnitte einer Vielzahl an Verbindungsrohren (32) hält und die Vielzahl an Verbindungsrohren (32) in einer Anordnung fixiert, und weiterhin ein oder mehrere flexible Eingriffsteile (37) beinhaltet, die auf der Kupplungsplatte bereitgestellt werden und mit einem oder mehreren, auf dem Steckergehäuse-Hauptkörper (10) bereitgestellten, an inneren Flächen des Steckverbinder-Aufnahmeabschnitts (23) bereitgestellten Eingriffs-Vorsprüngen (26) in Eingriff bringbar sind,
wobei der oder die flexiblen Eingriffsteile (37) in Richtung des Zentrums der Kupplungsplatte (31) durch eine Bewegung auf den oder die respektiven Eingriffs-Vorsprünge (26) bei einem Verbindungsprozess elastisch verformt werden, bei dem der Unter-Steckverbinder (30) in den Steckverbinder-Aufnahmeabschnitt (23) eingesetzt wird, und elastisch zumindest teilweise zurückversetzt werden, um mit den jeweiligen Eingriffs-Vorsprüngen (26), in einer Verbindungs-Endposition, im Eingriff zu stehen,
wobei die flexiblen Eingriffsteile (37) ein Paar geneigte Teile (38) beinhalten, die von vorderen Endabschnitten der Endflächen der Kupplungsplatte (31) bei den einen Stirnflächen der Verbindungsrohre (32) ausgehend, nach hinten und nach außen gerichtet, nach Art eines Kragarmes verlaufen, und ein Paar Eingriffsteile (39), die weiter nach hinten von den hinteren Enden der beiden geneigten Teile (38) verlaufen,
wobei die beiden geneigten Teile (38) an Positionen gebildet werden, die mit den Eingriffs-Vorsprüngen (26) in Kontakt kommen, wenn der Unter-Steckverbinder (30) in den Steckverbinder-Aufnahmeabschnitt (23) eingesetzt wird, und
wobei die Eingriffsteile (39) mit Eingriffslöchern (39A) gebildet werden und Teile davon vor den oder in der Nähe der Eingriffslöcher (39A) als Press-/Ausrück-Abschnitte (40) dienen.

7. Ein Verfahren nach Anspruch 6, wobei das Verbindungsrohr (32) zumindest teilweise in das Innere des Rohranschlusses (54) eingefügt wird, um verbunden zu werden.

8. Ein Verfahren nach Anspruch 6, oder 7, wobei mindestens ein O-Ring (35), der in Kontakt mit der inneren Umfangsfläche des Rohranschlusses (54) gehalten werden soll, an einen äußeren Umfangsbereich der einen Stirnseite des Verbindungsrohrs (32) angepasst wird und/oder das Verbindungsrohr (32) und der Unter-Steckverbinder (30) aus Kunstharz hergestellt werden und einstückig oder einheitlich gebildet werden.

## Revendications

1. Un connecteur pour la canalisation de fluides pour raccorder de manière détachable une pluralité de tuyaux (T) pour fluide, qui correspond à une pluralité de tuyaux complémentaires (*mating pipes*) (54) pourvus dans un connecteur complémentaire (50), comprenant :
un corps principal (10) de boîtier de connecteur pouvant être raccordé avec le connecteur complémentaire (50) ;
au moins un sous-connecteur (30) à fournir de manière détachable dans le corps principal (10) de boîtier de connecteur ;
une pluralité de tuyaux à joint (32) pourvus dans le sous-connecteur (30) et dont chacun présente un côté frontal à raccorder avec un tuyau complémentaire (54) correspondant quand le corps principal (10) de boîtier de connecteur est raccordé au connecteur complémentaire (50), et l'autre côté frontal pouvant être raccordé avec un tuyau (T) pour fluide correspondant ; et
un mécanisme d'engagement (26 ; 37) pour maintenir le sous-connecteur (30) de façon engagée avec le corps principal (10) de boîtier de connecteur,
sachant que la pluralité de tuyaux à joint (32) et le sous-connecteur (30) sont réalisés en résine synthétique et formés de manière unitaire,
sachant que le corps principal (10) de boîtier de connecteur contient au moins une portion de logement (23) de sous-connecteur capable de loger au moins en partie le ou les sous-connecteurs (30),
sachant que le sous-connecteur (30) contient une plaque d'accouplement (31), qui maintient des parties d'une pluralité de tuyaux à joint (32) et fixe la pluralité de tuyaux à joint (32) dans un arrangement, et une ou plusieurs pièces d'engagement flexibles (37) fournies sur la plaque d'accouplement et pouvant être engagées avec une ou plusieurs saillies d'engagement (26) fournies sur le corps principal (10) de boîtier de connecteur, sur des surfaces internes de la portion de logement (23) de sous-connecteur,
sachant que la ou les pièces d'engagement flexibles (37) sont déformées de manière élastique en direction du centre de la plaque d'accouplement (31) par un mouvement sur la ou les respectives saillies d'engagement (26) en un processus de connexion consistant à insérer le sous-connecteur (30) dans la portion de logement (23) de sous-connecteur, et qu'elles sont élastiquement rétablies au moins en partie pour être engagées avec les respectives saillies d'engagement (26) dans une position terminale d'engagement,
sachant que les pièces d'engagement flexibles (37) contiennent une paire de pièces inclinées (38), qui s'étendent à partir de portions d'extrémité avant des surfaces terminales de la plaque d'accouplement (31) sur les côtés frontales des tuyaux à joint (32) vers l'arrière et vers l'extérieur de manière à faire librement saillie, et une paire de pièces d'engagement (39), qui s'étendent plus en arrière à partir des extrémités arrières des deux pièces inclinées (38),
sachant que les deux pièces inclinées (38) sont formées dans des positions qui entrent en contact avec les saillies d'engagement (26) quand le sous-connecteur (30) est inséré dans la portion de logement (23) de sous-connecteur, et
sachant que les pièces d'engagement (39) sont formées avec des trous d'engagement (39A) et que des parties de celles-ci avant ou à proximité des trous d'engagement (39A) servent de portions de pression/désengagement (40).

2. Un connecteur pour la canalisation de fluides d'après la revendication 1, sachant que le tuyau à joint (32) est au moins en partie inséré à l'intérieur du tuyau complémentaire (54) à raccorder.

3. Un connecteur pour la canalisation de fluides d'après une des revendications précédentes, sachant qu'au moins un joint torique (35) à garder en contact avec la surface périphérique intérieure du tuyau complémentaire (54) est ajusté sur une partie périphérique extérieure du côté frontal du tuyau à joint (32).

4. Un assemblage de connecteur pour la canalisation de fluides comprenant un connecteur d'après une des revendications précédentes et un connecteur complémentaire (50) pouvant être raccordé avec un corps principal (10) de boîtier de connecteur du connecteur.

5. Un assemblage de connecteur pour la canalisation de fluides d'après la revendication 4, sachant que :
le connecteur complémentaire (50) contient un boîtier de connecteur électrique complémentaire (53) ; et que
le corps principal (10) de boîtier de connecteur contient un boîtier de connecteur électrique (16) pouvant être raccordé avec le boîtier de connecteur électrique complémentaire (53).

6. Un procédé de raccordement démontable d'une pluralité de tuyaux (T) pour fluide à une pluralité de tuyaux complémentaires (*mating pipes*) (54), comprenant les étapes suivantes :
fournir un corps principal (10) de boîtier de connecteur et un connecteur complémentaire (50), qui peuvent être raccordés entre eux ;
fournir au moins un sous-connecteur (30) présentant une pluralité de tuyaux à joint (32),
raccorder un côté frontal de chacun des tuyaux à joint (32) avec un tuyau (T) pour fluide correspondant ;
fournir le sous-connecteur (30) de manière démontable dans le corps principal (10) de boîtier de connecteur et maintenir le sous-connecteur (30) de manière qu'il reste engagé avec le corps principal (10) de boîtier de connecteur, et
raccorder le corps principal (10) de boîtier de connecteur avec le connecteur complémentaire (50) sachant qu'ainsi l'autre côté frontal de chacun des tuyaux à joint (32) est raccordé avec un tuyau complémentaire (54) correspondant,
sachant que la pluralité de tuyaux à joint (32) et le sous-connecteur (30) sont réalisés en résine synthétique et formés de manière unitaire,
sachant que le corps principal (10) de boîtier de connecteur contient au moins une portion de logement (23) de sous-connecteur capable de loger au moins en partie le ou les sous-connecteurs (30),
sachant que le sous-connecteur (30) contient une plaque d'accouplement (31), qui maintient des parties d'une pluralité de tuyaux à joint (32) et fixe la pluralité de tuyaux à joint (32) dans un arrangement, et une ou plusieurs pièces d'engagement flexibles (37) fournies sur la plaque d'accouplement et pouvant être engagées avec une ou plusieurs saillies d'engagement (26) fournies sur le corps principal (10) de boîtier de connecteur, sur des surfaces internes de la portion de logement (23) de sous-connecteur,
sachant que la ou les pièces d'engagement flexibles (37) sont déformées de manière élastique en direction du centre de la plaque d'accouplement (31) par un mouvement sur la ou les respectives saillies d'engagement (26) en un processus de connexion consistant à insérer le sous-connecteur (30) dans la portion de logement (23) de sous-connecteur, et qu'elles sont élastiquement rétablies au moins en partie pour être engagées avec les respectives saillies d'engagement (26) dans une position terminale d'engagement,
sachant que les pièces d'engagement flexibles (37) contiennent une paire de pièces inclinées (38), qui s'étendent à partir de portions d'extrémité avant des surfaces terminales de la plaque d'accouplement (31) sur les côtés frontales des tuyaux à joint (32) vers l'arrière et vers l'extérieur de manière à faire librement saillie, et une paire de pièces d'engagement (39), qui s'étendent plus en arrière à partir des extrémités arrières des deux pièces inclinées (38),
sachant que les deux pièces inclinées (38) sont formées dans des positions qui entrent en contact avec les saillies d'engagement (26) quand le sous-connecteur (30) est inséré dans la portion de logement (23) de sous-connecteur, et
sachant que les pièces d'engagement (39) sont formées avec des trous d'engagement (39A) et que des parties de celles-ci avant ou à proximité des trous d'engagement (39A) servent de portions de pression/désengagement (40).

7. Un procédé d'après la revendication 6, sachant que le tuyau à joint (32) est au moins en partie inséré à l'intérieur du tuyau complémentaire (54) à raccorder.

8. Un procédé d'après la revendication 6 ou 7, sachant qu'au moins un joint torique (35) à maintenir en contact avec la surface périphérique intérieure du tuyau complémentaire (54) est ajusté sur une partie périphérique extérieure du côté frontal du tuyau à joint (32) et/ou que le tuyau à joint (32) et le sous-connecteur (30) sont réalisés en résine synthétique et formés de manière intégrale ou unitaire.
